(19)

Europäisches
Patentamt
European
Patent Office
Office européen
des brevets

(11) **EP 2 790 118 A2**

(12) **EUROPEAN PATENT APPLICATION**

(43) Date of publication:
**15.10.2014 Bulletin 2014/42**

(51) Int Cl.:
***G06F 17/50*** *(2006.01)*

(21) Application number: **14161197.0**

(22) Date of filing: **21.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.04.2013 JP 2013083337**

(71) Applicant: **FUJITSU LIMITED**
**Kawasaki-shi,**
**Kanagawa 211-8588 (JP)**

(72) Inventors:
• **Kobayashi, Sachio**
  **Kawasaki-shi, Kanagawa 211-8588 (JP)**

• **Kobayashi, Hiroki**
  **Kawasaki-shi, Kanagawa 211-8588 (JP)**
• **Ikeda, Hiroshi**
  **Kawasaki-shi, Kanagawa 211-8588 (JP)**
• **Hashima, Masayoshi**
  **Kawasaki-shi, Kanagawa 211-8588 (JP)**
• **Sato, Yuichi**
  **Kawasaki-shi, Kanagawa 211-8588 (JP)**

(74) Representative: **Wilding, Frances Ward**
**Haseltine Lake LLP**
**Lincoln House, 5th Floor**
**300 High Holborn**
**London WC1V 7JH (GB)**

(54) **Information processing apparatus and method for thermo-fluid analysis**

(57) A thermo-fluid analysis program causes an information processing apparatus (1) to perform a principal component analysis using a plurality of analysis results in a thermo-fluid analysis area and compute an approximate solution approximate to a final solution by summing analysis patterns obtained by the principal component analysis under a new analysis condition. The thermo-fluid analysis program causes the information processing apparatus (1) to perform a thermo-fluid analysis using the computed approximate solution as an initial state under the new analysis condition.

FIG.9A

**Description**

FIELD

The embodiment discussed herein is directed to a thermo-fluid analysis program and the like.

BACKGROUND

Thermo-fluid simulation is used in design of servers and data centers for grasping heat distributions and flows of air at a steady state without using the actual ones to be designed.

In the thermo-fluid simulation, a temperature distribution and a flow of air at a steady state (a final solution) are numerically computed by repeating simulation calculation from an initial state (e.g., refer to Japanese Laid-open Patent Publication No. 2007-179501, Japanese Laid-open Patent Publication No. 2009-258879, and Japanese Laid-open Patent Publication No. 2005-309755).

The conventional thermo-fluid simulation, however, has a problem in that analysis takes long time from the initial state to the final solution.

One of the factors that determine the analysis time of the thermo-fluid simulation is the initial state. It is known that the smaller error of the initial state with respect to the final solution reduces the analysis time. The initial state whose error with respect to the final solution is smaller is, however, unknown before the thermo-fluid simulation is performed. Thus, an appropriate initial state is not determined. As a result, the analysis takes long time from the initial state to the final solution in some cases.

Accordingly, it is desirable to provide a thermo-fluid analysis program, an information processing apparatus, and a thermo-fluid analysis method that can reduce the analysis time of thermo-fluid analysis.

SUMMARY

According to an aspect of an embodiment, a non-transitory computer-readable recording medium stores a program. The program causes a computer to execute a thermo-fluid analysis process. The process includes performing a principal component analysis using a plurality of analysis results in an analysis area about thermo-fluid. The process includes computing an approximate solution approximate to a final solution by summing analysis patterns obtained as a result of the principal component analysis on the basis of a new analysis condition. The process includes performing a thermo-fluid analysis using the computed approximate solution as an initial state under the new analysis condition.

BRIEF DESCRIPTION OF DRAWINGS

FIG. 1 is a functional block diagram illustrating a structure of an information processing apparatus according to an embodiment of the present invention;
FIG. 2 is a schematic diagram illustrating an example of an analysis target;
FIG. 3 is a schematic diagram illustrating an example of formed data;
FIG. 4 is a schematic diagram explaining processing performed by a grouping unit;
FIG. 5 is a schematic diagram explaining processing performed by an approximate solution generation unit;
FIG. 6 is a schematic diagram illustrating an example of correction of an approximate solution;
FIG. 7 is a schematic diagram explaining overall processing performed by the grouping unit and the approximate solution generation unit;
FIG. 8 is a flowchart illustrating thermo-fluid analysis processing according to the embodiment;
FIG. 9A is a first schematic diagram illustrating an example of a case where the thermo-fluid analysis processing according to the embodiment is used for a thermal analysis on a data center;
FIG. 9B is a second schematic diagram illustrating the example of the case where the thermo-fluid analysis processing according to the embodiment is used for the thermal analysis on the data center; and
FIG. 10 is a schematic diagram illustrating an example of a computer that executes a thermo-fluid analysis program.

DESCRIPTION OF EMBODIMENT

Preferred embodiments of the present invention will be explained with reference to accompanying drawings. In the following embodiment, the invention is applied to an information processing apparatus that performs a thermo-fluid analysis. The embodiment, however, does not limit the invention. The invention can be generally and widely applied to apparatuses that perform thermo-fluid analyses.

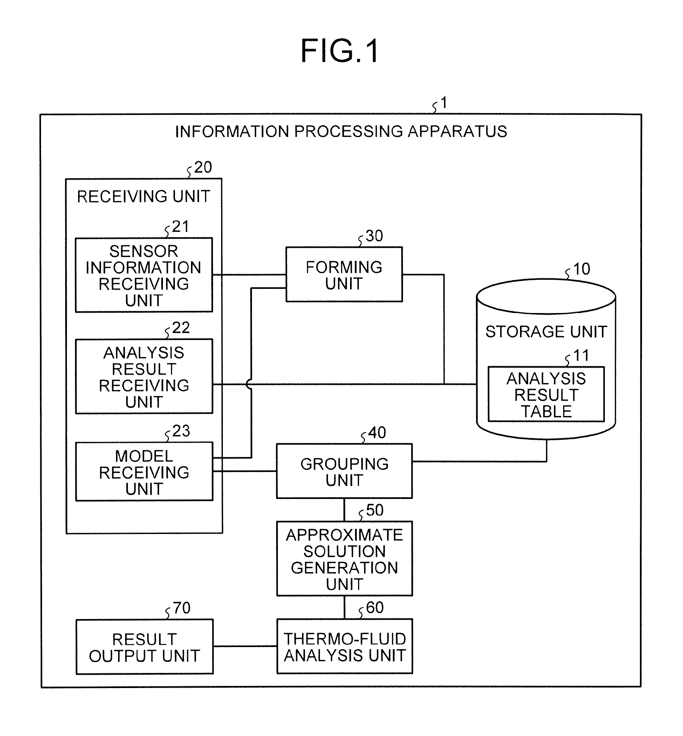

FIG. 1 is a functional block diagram illustrating a structure of an information processing apparatus according to the embodiment. As illustrated in FIG. 1, an information processing apparatus 1 includes a storage unit 10, a receiving unit 20, a forming unit 30, a grouping unit 40, an approximate solution generation unit 50, a thermo-fluid analysis unit 60, and a result output unit 70.

The information processing apparatus 1 sets an area where a server is disposed as an analysis target and performs a thermo-fluid analysis on the analysis target, for example. The analysis target is not limited to the area where the server is disposed. The analysis target may be a data center where racks housing servers are disposed. Any space from which a heat distribution and a flow of air are to be grasped may be applicable to the analysis target. In the following description, the analysis target is an area where an obstacle is disposed.

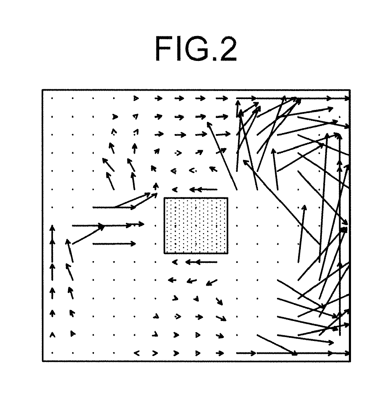

FIG. 2 is a schematic diagram illustrating an example of the analysis target. As illustrated in FIG. 2, the analysis target is a modeled area where an obstacle is disposed at the center. In the analysis target, a blower that changes temperatures and flows of air, such as an electric fan, an air conditioner, or a fan, is disposed at a certain location. In the analysis target, temperatures and flows of air are set in accordance with analysis conditions. The analysis conditions, which relate to the analysis, include strength of wind supplied by the blower and a set temperature, for example. The analysis conditions are not limited to those examples. The analysis conditions may include an increase and a decrease in electric energy per second (watt), for example. The arrows illustrated in FIG. 2 represent flows of air.

About the analysis target, the information processing apparatus 1 produces, on the basis of pre-existing analysis results, an approximate solution (initial state) whose error with respect to a final solution is smaller by using the analysis conditions associated with the pre-existing analysis results and the analysis conditions used for the analysis this time as parameters. The information processing apparatus 1 then performs the thermo-fluid analysis from the produced initial state under the analysis conditions used for the analysis this time to numerically compute the final solution (temperatures and flows of air) at a steady state. In the embodiment, the approximate solution, the initial state, and an initial value are used as the same meaning.

The storage unit 10 includes an analysis result table 11. The analysis result table 11 stores therein the analysis results obtained by the thermo-fluid analysis performed in the past. Such analysis results are referred to as the "pre-existing analysis results", hereinafter. The pre-existing analysis results include a set of the analysis conditions, flow velocity distribution information, and temperature distribution information as data. The analysis conditions include strength of wind supplied by the blower and a set temperature, for example. The storage unit 10 is a semiconductor memory element such as a random access memory (RAM) or a flash memory, or a storage device such as a hard disk drive (HDD) or an optical disk device.

The receiving unit 20 includes a sensor information receiving unit 21, an analysis result receiving unit 22, and a model receiving unit 23. The model receiving unit 23 receives, from an external device of the information processing apparatus 1, information about an analysis model into which the analysis target is modeled in three dimensions and the analysis conditions used for the analysis this time. The external device is a removable disk or an HDD, for example. The external device may be coupled to or not coupled to the information processing apparatus 1 through a network. The information about the analysis model includes a shape of the analysis model, information about a plurality of meshes covering the analysis model, and characteristics of the blower, for example.

The sensor information receiving unit 21 receives sensor information from sensors. The sensor information is discrete numerical data in an analysis target space and includes measured values capable of reproducing spatial distributions of temperatures and flows of air. The sensor information includes information corresponding to the analysis conditions under which each sensor performs measurement. For example, the sensor information includes positions of the sensors in the analysis target, temperatures and flow velocity values detected by the sensors, and the analysis conditions.

The analysis result receiving unit 22 receives the pre-existing analysis results from the external device of the information processing apparatus 1. The external device is a removable disk or an HDD, for example. The external device may be coupled to or not coupled to the information processing apparatus 1 through a network. The pre-existing analysis results include the positions, the temperature distributions, the flow velocity distributions, and the analysis conditions. The positions described herein mean the positions of meshes in the analysis model into which the analysis target is modeled. The temperature distribution and the flow velocity distribution described herein mean the distributions of the temperatures and the flow velocities at the respective positions at certain time, for example. The analysis conditions described herein mean the analysis conditions at the respective positions at that time, for example. The analysis result receiving unit 22 records the received analysis results in the analysis result table 11.

The forming unit 30 forms the sensor information into the same forms as the pre-existing analysis results. The forming unit 30 computes the flow velocity and the temperature at each mesh of the analysis model on the basis of the sensor information received by the sensor information receiving unit 21 to reproduce the spatial distributions in the analysis target. The forming unit 30 records the formed sensor information in the analysis result table 11. The forming unit 30 reproduces the spatial distribution from the discrete data in the space using a least square method, for example.

The method, however, is not limited to the least square method. Any conventional technique may be used for reproducing the spatial distribution from the discrete data in the space. For example, spatial interpolating such as polynomial regression or smoothing spline may be used.

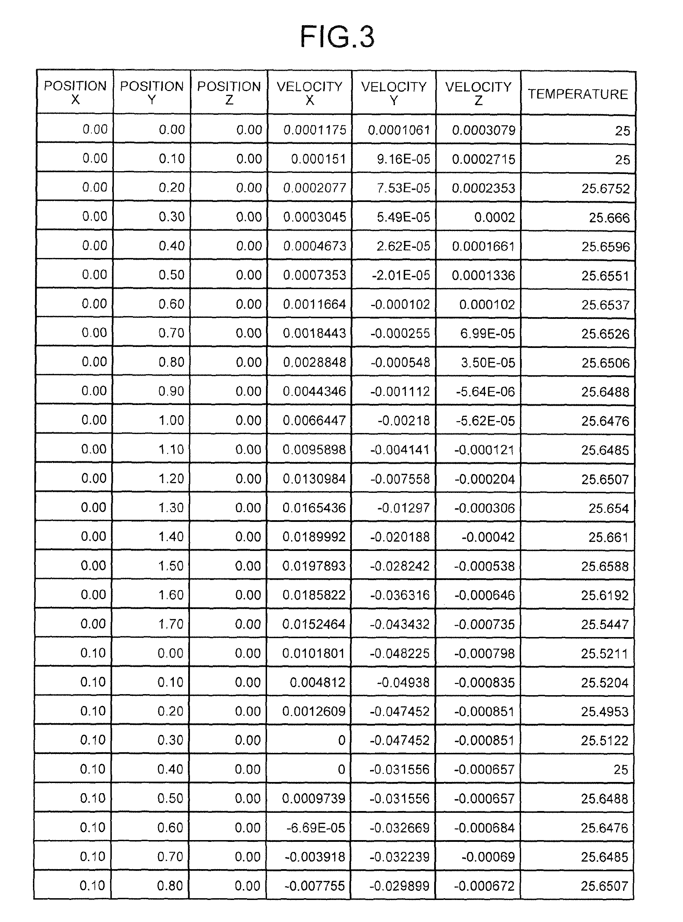

An example of the formed data is described with reference to FIG. 3. FIG. 3 is a schematic diagram illustrating an example of the formed data. As illustrated in FIG. 3, position X, position Y, position Z, velocity X, velocity Y, velocity Z, and temperature are associated with each other as the formed data. The position X, the position Y, the position Z are position data after the forming in which the position data of the sensor information is associated with the respective positions of the meshes of the analysis model. The velocity X, the velocity Y, and the velocity Z are velocity data after the forming in which the flow velocity values of the sensor information are formed into the same unit as the analysis results, for example. The temperature is temperature data after the forming in which the temperature data of the sensor information is formed into the same unit as the analysis results, for example. For example, position X "0.00", position Y "0.00", position Z "0.00", velocity X "0.0001175", velocity Y "0.0001061", velocity Z "0.0003079", and temperature "25" in the first line are stored in association with each other.

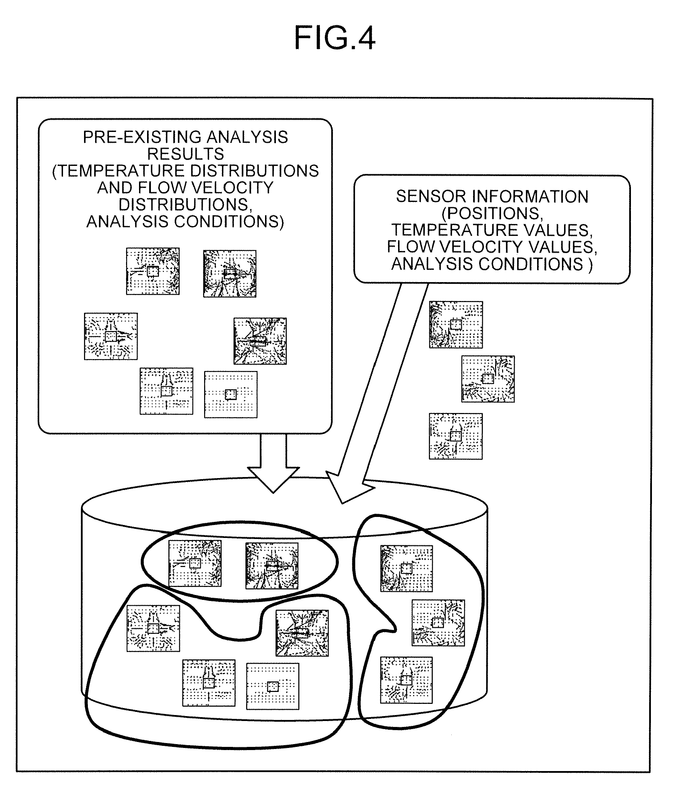

Referring back to FIG. 1, the grouping unit 40 groups the pre-existing analysis results (including the formed data) stored in the analysis result table 11 on the basis of the analysis conditions. The grouping unit 40 puts the pre-existing analysis results including similar analysis conditions into one group. FIG. 4 is a schematic diagram explaining processing performed by the grouping unit 40. As illustrated in FIG. 4, the grouping unit 40 groups the pre-existing analysis results and the formed sensor information into groups on the basis of the respective analysis conditions included therein.

Referring back to FIG. 1, the grouping unit 40 may group the pre-existing analysis results and the formed sensor information on the basis of the respective analysis conditions included therein using a clustering technique, for example. In the embodiment, the grouping unit 40 uses a K-means method in the clustering technique. The grouping unit 40 selects randomly any k number of cluster centers $c_i$ that minimize an evaluation function F expressed by expression (1).

$$F = \sum_{x_j \in X} \min_{i \in k} \left\| x_j - c_i \right\| \qquad (1)$$

where $x_j$ is each data, and the data includes the pre-existing analysis results and the formed sensor information, and $c_i$ is the cluster center, which means the center of a group.

The grouping unit 40 allocates n pieces of data to a cluster (group) i that is the nearest cluster from each data point $x_j$. The grouping unit 40 then computes the cluster center of each cluster in accordance with expression (2).

$$c_i = \frac{1}{|C_i|} \sum_{x_j \in C_i} x_j \qquad (2)$$

where $C_i$ is the class of data included in each cluster i, and $|C_i|$ is the number of pieces of data included in the cluster Ci.

The grouping unit 40 repeats the processing to allocate data to the cluster and to compute the cluster center until when there is no change in cluster, i.e., no new group is produced. In this way, the grouping unit 40 can group the class of the pre-existing information such as the pre-existing analysis results into groups on the basis of the similarity of the analysis conditions between the pieces of pre-existing information.

The approximate solution generation unit 50 uses the data included in the group having the analysis conditions similar to the analysis conditions used for the analysis this time and produces, about the analysis model, an approximate solution (initial state) corresponding to the analysis conditions. For example, the approximate solution generation unit 50 selects a group having the analysis conditions similar to the analysis conditions used for the analysis this time out of the groups grouped by the grouping unit 40. The approximate solution generation unit 50 interpolates a flow velocity field and a temperature field corresponding to the analysis conditions used for the analysis this time, on the basis of the pre-existing information included in the selected group and using the analysis conditions associated with the pre-existing information as parameters. As a result, the approximate solution generation unit 50 produces an approximate solution (initial state) whose error with respect to the final solution is smaller.

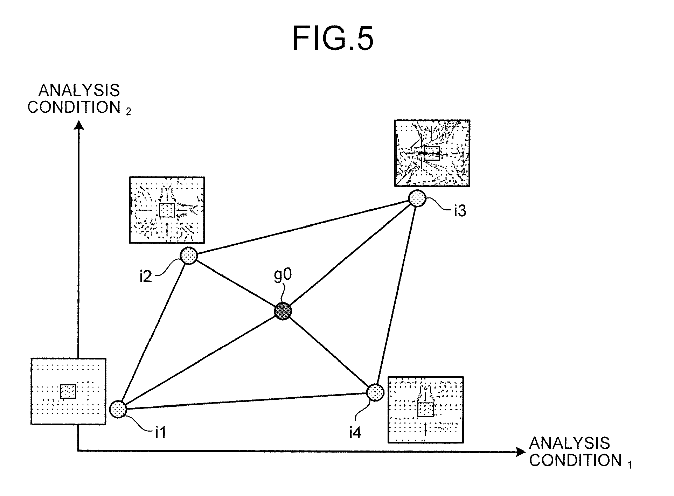

FIG. 5 is a schematic diagram explaining processing performed by the approximate solution generation unit. As illustrated in FIG. 5, the X axis represents an analysis condition $_1$ while the Y axis represents an analysis condition $_2$. The analysis condition $_1$ and the analysis condition $_2$ are types of analysis conditions. For example, the analysis condition $_1$ is the strength of wind supplied by an air conditioner while the analysis condition $_2$ is the strength of wind supplied by an electric fan. The approximate solution generation unit 50 selects a group having the analysis conditions similar to the analysis conditions used for the analysis this time out of the groups grouped by the grouping unit 40. The approximate solution generation unit 50 interpolates a flow velocity field and a temperature field corresponding to the analysis conditions used for the analysis this time, on the basis of the pre-existing information included in the selected group and using the analysis conditions associated with the pre-existing information as the parameters. In this case, the selected group includes pre-existing information i1 to pre-existing information i4. The approximate solution generation unit 50 produces an approximate solution g0 corresponding to the values of the analysis condition $_1$ and the analysis condition $_2$ used for the analysis this time using the values of the analysis condition $_1$ and the analysis condition $_2$ corresponding to the respective pieces of pre-existing information i1 to i4 as the parameters.

Referring back to FIG. 1, it is assumed that the group having the analysis conditions similar to the analysis conditions used for the analysis this time includes n pieces of data (pre-existing information) $V_i$ (i - 0, ... , n-1), for example. It is assumed that data $V_i$ is expressed by expression (3), in which $V_i$ is expressed by adding orthonormal bases bj based on parameters $u_{i,j}$ (j = 0, ... , m-1) of m types of analysis conditions to a common pattern X, as a result of a principal component analysis.

$$V_i \;=\; \sum_{j=0}^{m-1} w_j u_{i,j} b_j \;+\; X \qquad\qquad (3)$$

where the common pattern X is an average that indicates the common pattern of the pieces of data (pre-existing information) $V_i$ (i = 0, ... , n-1), and $w_j$ are scaling factors relating to the parameters of the respective analysis conditions.

The approximate solution generation unit 50 obtains the orthonormal bases bj that minimize expression (4).

$$\sum_{i=0}^{n-1} \left\| V_i \;-\; \sum_{j=0}^{m-1} w_j u_{i,j} b_j \right\|^2 \qquad\qquad (4)$$

In this way, the approximate solution generation unit 50 obtains the orthonormal bases of the patterns produced due to the difference in analysis condition.

The approximate solution generation unit 50 produces data $V_{target}$ expressed by expression (5) as an approximate solution, and data $V_{target}$ is computed using parameters $u_{target, j}$ of the analysis conditions used for the analysis this time.

$$V_{target} \;=\; \sum_{j=0}^{m-1} w_j u_{target,j} b_j \;+\; X \qquad\qquad (5)$$

In this way, the approximate solution generation unit 50 produces an approximate solution by adding the sum of the orthonormal bases bj based on the parameters of the analysis conditions used for the analysis this time to the common pattern, concerning the common pattern X and the orthonormal bases bj of the patterns produced due to the difference in analysis condition. The approximate solution generation unit 50 produces an approximate solution (initial state) by interpolating the flow velocity field and the temperature filed using the analysis conditions associated with the pre-existing information and the analysis conditions used for the analysis this time as the parameters.

The approximate solution generation unit 50 may correct the produced approximate solution so as to satisfy certain laws of physics.

For example, the approximate solution generation unit 50 corrects the produced approximate solution so as to satisfy the law of conservation of mass. In this case, the analysis target is incompressible fluid because the flow velocity of the fluid is smaller than the sound velocity. The law of conservation of mass that incompressible fluid satisfies is expressed by expression (6). Expression (6) is called an equation of continuity.

$$\nabla \times u = 0 \qquad\qquad (6)$$

where u is the velocity.

The flow velocity field produced by the interpolation, however, does not always satisfy expression (6). The approximate solution generation unit 50 thus corrects the pressure and the flow velocity so as to satisfy expression (6). An appropriate pressure correction amount and an appropriate flow velocity correction amount can be computed using a semi-implicit method for pressure-linked equation (SIMPLE method), for example.

For another example, the approximate solution generation unit 50 corrects the produced approximate solution so as to satisfy boundary conditions. The boundary conditions include a Dirichlet boundary condition and a Neumann boundary condition. In the Dirichlet boundary condition, a value of a calculation grid point is directly specified. The approximate solution generation unit 50 directly overwrites a temperature and a flow velocity at the grid point. In the Neumann boundary condition, a characteristic at a boundary such as a gradient is specified. The approximate solution generation unit 50 corrects a value on the boundary so as to satisfy the Neumann boundary condition on the basis of the values

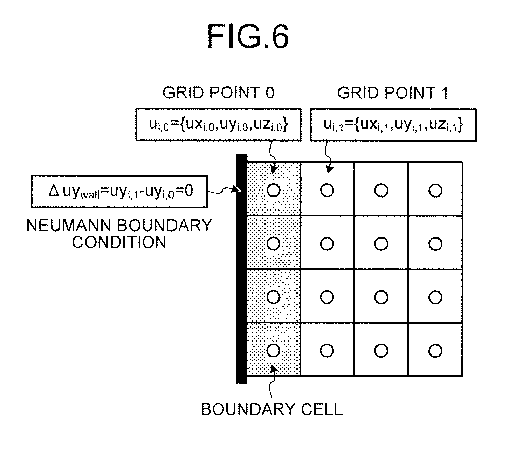

(temperatures or flow velocities) of the sounding grid points. The following describes boundary condition processing with reference to FIG. 6 as an example of the correction of an approximate solution. FIG. 6 is a schematic diagram illustrating an example of the correction of an approximate solution. As illustrated in FIG. 6, when "$uy_{i,1} - uy_{i,0} = 0$" is specified as the Neumann boundary condition, the approximate solution generation unit 50 corrects the flow velocity at grid point 0, which is a boundary cell, such that "$uy_{i,0} = uy_{i,1}$".

The thermo-fluid analysis unit 60 performs the thermo-fluid analysis using the approximate solution produced by the approximate solution generation unit 50 under the analysis conditions used for the analysis this time. The thermo-fluid analysis unit 60 numerically computes a final solution (temperatures and flows of air) at a steady state from the initial condition, to which the approximate solution is set.

The result output unit 70 outputs the final solution (temperatures and flows of air) obtained as a result of the thermo-fluid analysis to a monitor, for example. The result output unit 70 may store the final solution in the storage unit 10.

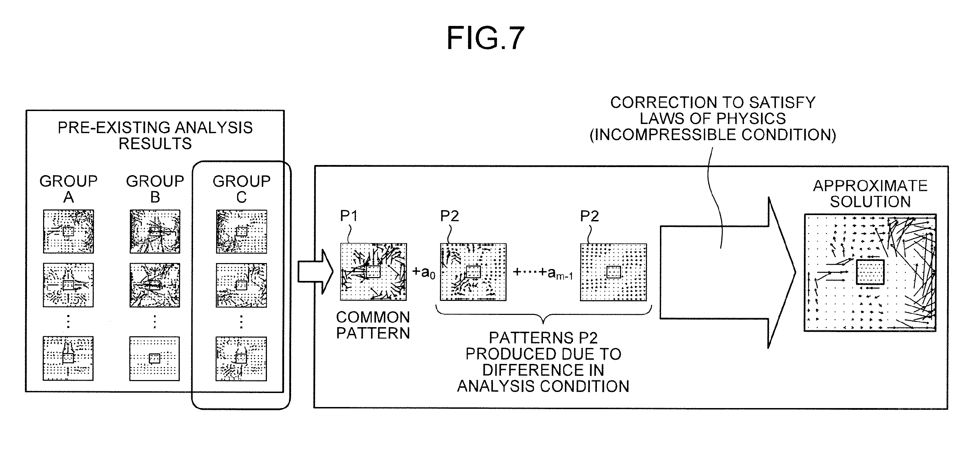

FIG. 7 is a schematic diagram explaining overall processing performed by the grouping unit and the approximate solution generation unit. As illustrated in FIG. 7, the grouping unit 40 groups the pre-existing analysis results (including the formed data) into groups each having similar analysis conditions on the basis of the respective analysis conditions included in the pre-existing analysis results. In the example illustrated in FIG. 7, the grouping unit 40 groups the pre-existing analysis results into groups A, B, and C.

The approximate solution generation unit 50 selects a group having the analysis conditions similar to the analysis conditions used for the analysis this time out of the groups grouped by the grouping unit 40. In this case, the approximate solution generation unit 50 selects the group C. The group C includes n number of pre-existing analysis results. The group C includes m types of analysis conditions.

The approximate solution generation unit 50 performs the principal component analysis on the respective analysis results included in the group C and obtains the common pattern and the orthonormal bases of the patterns produced due to the difference in analysis condition. As illustrated in FIG. 7, a common pattern P1 of the n number of analysis results and orthonormal bases P2 produced due to the difference in the m number of analysis conditions are obtained. The common pattern P1 corresponds to X in expression (3). The orthonormal bases P2 correspond to the orthonormal bases $b_j$ ($j = 0, ... , m-1$) in expression (3).

The approximate solution generation unit 50 produces an approximate solution by adding the sum of the orthonormal bases based on the parameters of the analysis conditions used for the analysis this time to the common pattern, concerning the common pattern and the orthonormal bases of the patterns produced due to the difference in analysis conditions. In this case, an approximate solution is produced by adding the common pattern P1 to the orthonormal bases P2 of the patterns produced due to the difference in analysis condition. In FIG. 7, $a_0$ to $a_{m-1}$ are weights computed on the basis of the analysis conditions used for the analysis this time, and correspond to the respective $w_j u_{target,j}$ in expression (5). For example, $a_0$ corresponds to $w_0 u_{target,0}$ and $a_1$ corresponds to $w_1 u_{target,1}$.

Furthermore, the approximate solution generation unit 50 corrects the produced approximate solution so as to satisfy laws of physics (incompressible condition). In this way, the approximate solution is produced by the grouping unit 40 and the approximate solution generation unit 50.

Procedure of thermo-fluid analysis processing

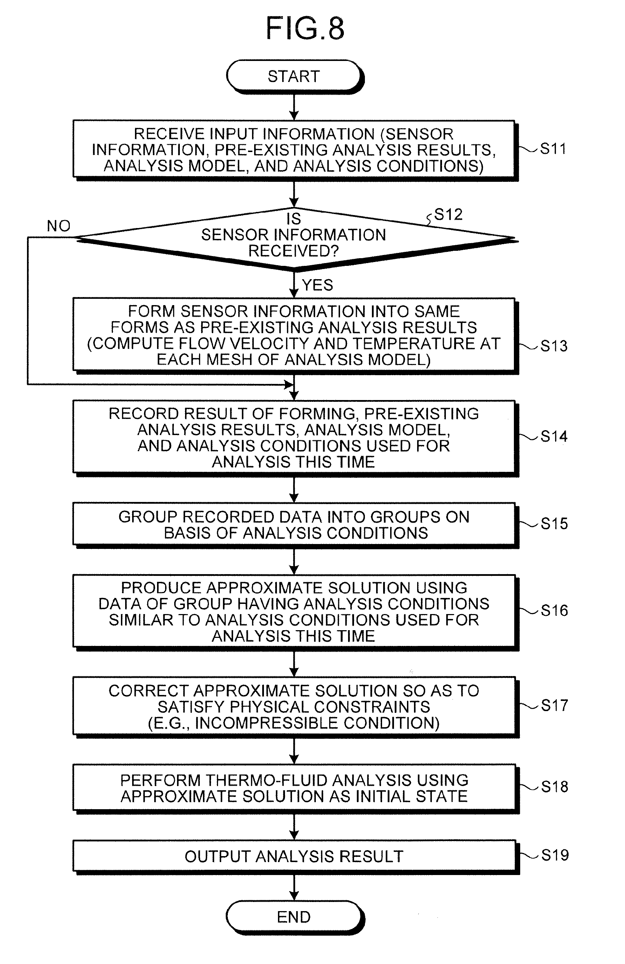

The following describes a procedure of thermo-fluid analysis processing according to the embodiment with reference to FIG. 8. FIG. 8 is a flowchart illustrating the thermo-fluid analysis processing according to the embodiment.

The receiving unit 20 waits for receiving input information, and then receives input information (step S11). For example, the analysis result receiving unit 22 receives the pre-existing analysis results as the input information. The pre-existing analysis results include a set of the analysis conditions, the flow velocity distribution information, and the temperature distribution information as data. The model receiving unit 23 receives an analysis model and the analysis conditions used for the analysis this time as the input information. The sensor information receiving unit 21 may either receive the sensor information or not receive the sensor information as the input information.

The receiving unit 20 determines whether the sensor information is received (step S12). If the receiving unit 20 determines that no sensor information is received (No at step S12), the process performed by the receiving unit 20 proceeds to step S14.

If the receiving unit 20 determines that the sensor information is received (Yes at step S12), the forming unit 30 forms the sensor information into the same forms as the pre-existing analysis results (step S13). In other words, the forming unit 30 computes the flow velocity and the temperature at each mesh of the analysis model on the basis of the sensor information received by the sensor information receiving unit 21 to reproduce the spatial distributions in the analysis target. Thereafter, the process performed by the forming unit 30 proceeds to step S14.

At step S14, the receiving unit 20 records the pre-existing analysis results, the analysis model, and the analysis conditions used for the analysis this time in the storage unit 10. If the receiving unit 20 receives the sensor information, the forming unit 30 records the result of the forming of the sensor information in the storage unit 10 (step S14). The pre-existing analysis results and the result of the forming of the sensor information are recorded in the analysis result table 11.

The grouping unit 40 groups the data (pre-existing analysis results and the result of the forming) recorded in the analysis result table 11 into groups on the basis of the respective analysis conditions corresponding to the respective pieces of data (step S15). For example, the grouping unit 40 groups the data using a clustering technique.

The approximate solution generation unit 50 uses the data included in the group having the analysis conditions similar to the analysis conditions used for the analysis this time and produces, about the analysis model, an approximate solution (initial state) corresponding to the analysis conditions (step S16). For example, the approximate solution generation unit 50 selects a group having the analysis conditions similar to the analysis conditions used for the analysis this time out of the groups grouped by the grouping unit 40. The approximate solution generation unit 50 performs the principal component analysis on the respective analysis results included in the selected group and obtain the common pattern and the orthonormal bases of the patterns produced due to the difference in analysis condition. The approximate solution generation unit 50 produces an approximate solution by adding the sum of the orthonormal bases based on the parameters of the analysis conditions used for the analysis this time to the common pattern, concerning the common pattern and the orthonormal bases of the patterns produced due to the difference in analysis condition.

Furthermore, the approximate solution generation unit 50 corrects the produced approximate solution so as to satisfy physical constraints (step S17). For example, the approximate solution generation unit 50 corrects the produced approximate solution so as to satisfy the law of conservation of mass (a condition of incompressible fluid).

The thermo-fluid analysis unit 60 performs the thermo-fluid analysis from the initial state, to which the approximate solution is set (step S18). The result output unit 70 outputs the final solution (temperatures and flows of air) representing the analysis result obtained as a result of the thermo-fluid analysis to a monitor, for example (step S19).

As described above, the approximate solution generation unit 50 produces the initial state by interpolating the flow velocity field and the temperature filed corresponding to the analysis conditions used for the analysis this time, on the basis of the analysis results having the analysis conditions similar to the analysis conditions used for the analysis this time and using the analysis conditions associated with the analysis results as the parameters. Thus, this makes it possible for the approximate solution generation unit 50 to produce, before the analysis, the initial state whose error with respect to the final solution is smaller than that of the initial state that is uniform entirely in the analysis target. The thermo-fluid analysis processing thus can start the thermo-fluid analysis from the state close to the final solution, thereby making it possible to reduce the analysis time of the thermo-fluid analysis.

An example where the thermo-fluid analysis processing is applied to a thermal analysis on a data center

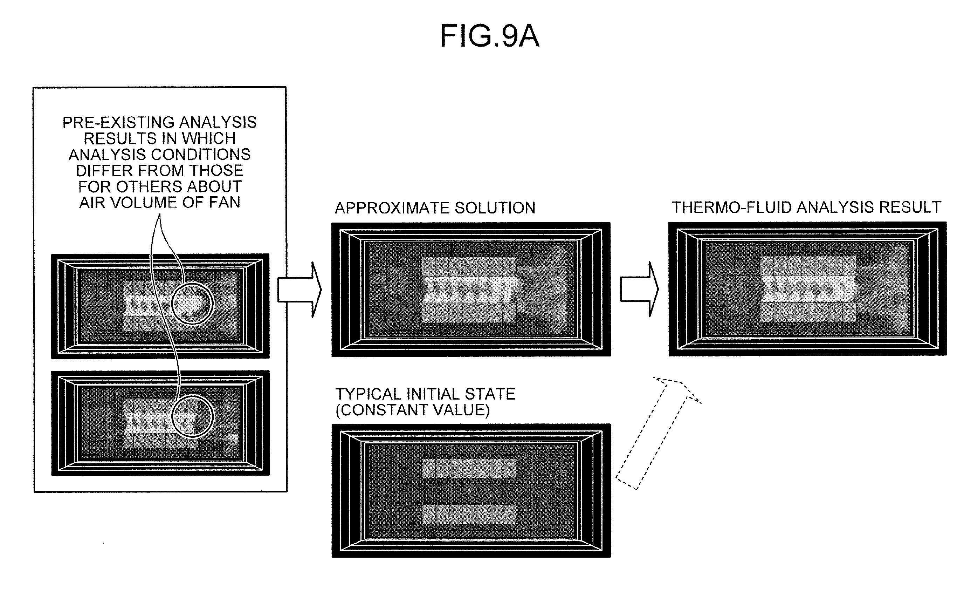

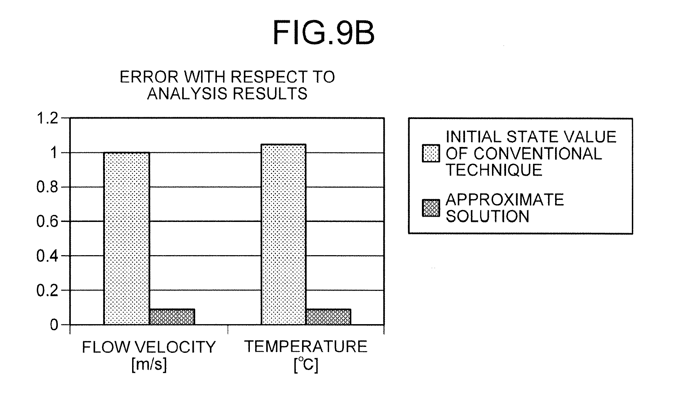

The following describes a case where the thermo-fluid analysis processing is applied to a thermal analysis on a data center with reference to FIGS. 9A and 9B. FIGS. 9A and 9B are schematic diagrams illustrating a case where the thermo-fluid analysis processing according to the embodiment is used for a thermal analysis on a data center. As illustrated in FIG. 9A, the data center including 14 racks is the analysis model. On the left side in FIG. 9A, two pre-existing analysis results are illustrated. In the two pre-existing analysis results, the analysis conditions differ in some racks in the 14 racks. In this case, only the analysis conditions of the racks circled in FIG. 9A differ from those of the other racks about an air volume of the fan.

Under such a situation, the flow velocity field and the temperature field corresponding to the analysis conditions used for the analysis this time are interpolated by the thermo-fluid analysis processing on the basis of the wind volume of the fan associated with the pre-existing analysis results. As a result of the interpolation, an approximate solution is produced as the initial state by the thermo-fluid analysis processing. In this case, the approximate solution illustrated in the middle of FIG. 9A is produced by the thermo-fluid analysis processing. The initial state (constant value) illustrated in the middle of FIG. 9A is the initial value produced by the conventional technique, in which the flow velocity field and the temperature field are uniform entirely in the analysis model.

In the thermo-fluid analysis processing, the thermo-fluid analysis is performed from the produced approximate solution and then a final solution (temperatures and flows of air) is obtained that indicates the result of the thermo-fluid analysis. In this case, the thermo-fluid analysis result is obtained as illustrated on the right side in FIG. 9A.

FIG. 9B illustrates the errors of the initial value of the conventional technique and the approximate solution with respect to the respective analysis results of the thermo-fluid analysis. The error of the approximate solution with respect to the analysis result of the thermo-fluid analysis is about 10% of that of the initial value of the conventional technique for each of the flow velocity and the temperature. The thermo-fluid analysis processing can produce the initial state (approximate solution) whose error with respect to the final solution is smaller than that of the initial state of the conventional technique.

As a result, the thermo-fluid analysis processing thus can start the thermo-fluid analysis from the state close to the final solution, thereby making it possible to reduce the analysis time of the thermo-fluid analysis.

Advantageous effects of the embodiment

The information processing apparatus 1 in the embodiment performs the principal component analysis using a plurality of analysis results about thermo-fluid in the analysis target. The information processing apparatus 1 then computes an approximate solution approximate to the final solution by summing the analysis patterns obtained as a result of the principal component analysis on the basis of the analysis conditions used for the analysis this time. The information processing apparatus 1 then performs the thermo-fluid analysis using the computed approximate solution as the initial state under the analysis conditions used for the analysis this time. The information processing apparatus 1 thus structured can start the thermo-fluid analysis from the state close to the final solution, thereby making it possible to reduce the analysis time of the thermo-fluid analysis.

The information processing apparatus 1 in the embodiment performs the principal component analysis using the analysis results analyzed under the analysis conditions similar to the analysis conditions used for the analysis this time. The information processing apparatus 1 thus structured can compute an approximate solution further approximate to the final solution using the analysis results analyzed under the analysis conditions similar to the analysis conditions used for the analysis this time in the principal component analysis. As a result, the information processing apparatus can start the thermo-fluid analysis from the state closer to the final solution, thereby making it possible to further reduce the analysis time of the thermo-fluid analysis.

The information processing apparatus 1 in the embodiment corrects the approximate solution so as to satisfy certain laws of physics. The information processing apparatus 1 thus structured can perform the thermo-fluid analysis with high accuracy by correcting the approximate solution so as to satisfy certain laws of physics.

When acquiring the sensor information about thermo-fluid, the information processing apparatus 1 in the embodiment forms the acquired sensor information into the same forms as the pre-existing analysis results. The information processing apparatus 1 then performs the principal component analysis using the pre-existing analysis results and the formed sensor information. The information processing apparatus 1 thus structured can perform the thermo-fluid analysis with high accuracy by performing the principal component analysis using not only the pre-existing analysis results but also the sensor information actually measured.

Modifications and extensions of the embodiment

In the embodiment described above, the model receiving unit 23 receives the information about an analysis model into which the analysis target is modeled in three dimensions and the analysis conditions used for the analysis this time. The storage unit 10 may preliminarily store therein the information about the analysis model and the analysis conditions used for the analysis this time.

The units of the information processing apparatus 1 need not be physically structured as illustrated in FIG. 1. A specific form of distribution and integration of the information processing apparatus 1 is not limited to that illustrated in FIG. 1. A part or all of the information processing apparatus 1 can be structured to be functionally or physically distributed or integrated in any unit in accordance with various loads and usage states, for example. For example, the sensor information receiving unit 21, the analysis result receiving unit 22, and the model receiving unit 23 may be integrated into a single unit. The approximate solution generation unit 50 may be divided into a first approximate solution generation unit that produces an approximate solution and a second approximate solution generation unit that corrects the approximate solution. The storage unit 10 may be coupled to the information processing apparatus 1 through a network as an external device of the information processing apparatus 1.

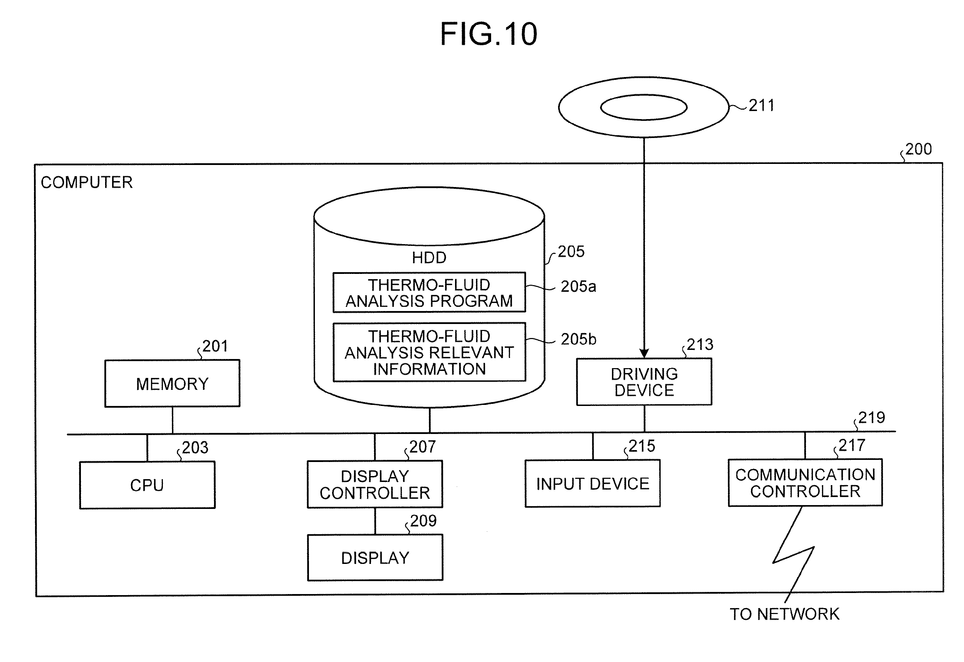

The various types of processing described in the embodiment described above can be achieved by a computer executing a preliminarily prepared program, such as a personal computer or a work station. The following describes an example of a computer that executes a thermo-fluid analysis program achieving the same functions as those of the information processing apparatus 1 illustrated in FIG. 1. FIG. 10 is a schematic diagram illustrating a computer that executes the thermo-fluid analysis program.

As illustrated in FIG. 10, a computer 200 includes a CPU 203 that executes various types of arithmetic processing, an input device 215 that receives data input from a user, and a display controller 207 that controls a display 209. The computer 200 further includes a driving device 213 that reads the program, for example, from a storage medium, and a communication controller 217 that transmits and receives data between itself and another computer through a network. The computer 200 further includes a memory 201 and an HDD 205, which temporarily store therein various types of information. The memory 201, the CPU 203, the HDD 205, the display controller 207, the driving device 213, the input device 215, and the communication controller 217 are coupled to each other through a bus 219.

The driving device 213 is used for a removable disk 211, for example. The HDD 205 stores therein a thermo-fluid analysis program 205a and thermo-fluid analysis relevant information 205b.

The CPU 203 reads the thermo-fluid analysis program 205a, loads it on the memory 201, and executes it as processing. The processing corresponds to the respective functional units of the information processing apparatus 1. The thermo-fluid analysis relevant information 205b corresponds to the analysis result table 11. The removable disk 211, for example, stores therein various types of information such as the thermo-fluid analysis program 205a.

The thermo-fluid analysis program 205a need not be stored preliminarily in the HDD 205. For example, the program may be stored in a "portable physical medium" inserted into the computer 200, such as a flexible disk (FD), a compact disc read only memory (CD-ROM), a digital versatile disc (DVD), a magneto optical disc, or an IC card. The computer 200 may read the thermo-fluid analysis program 205a from the portable physical medium and execute the program.

The invention has an advantage of reducing the analysis time of thermo-fluid analysis.

## Claims

1. A thermo-fluid analysis program that causes a computer (1) to execute:

   performing (50) a principal component analysis using a plurality of analysis results in an analysis area about thermo-fluid;
   computing (50) an approximate solution approximate to a final solution by summing analysis patterns obtained as a result of the principal component analysis on the basis of a new analysis condition; and
   performing (60) a thermo-fluid analysis using the computed approximate solution as an initial state under the new analysis condition.

2. The thermo-fluid analysis program according to claim 1, wherein, the performing (50) includes performing the principal component analysis using analysis results analyzed under analysis conditions similar to the new analysis condition.

3. The thermo-fluid analysis program according to claim 1 or 2, wherein, the computing (50) includes correcting the approximate solution so as to satisfy a certain law of physics.

4. The thermo-fluid analysis program according to any preceding claim, further comprising:

   acquiring (21) sensor information about the thermo-fluid; and
   forming the (30) acquired sensor information into the same forms as pre-existing analysis results, wherein the performing (50) includes performing the principal component analysis using the pre-existing analysis results and the formed sensor information.

5. An information processing apparatus (1), comprising:

   an analysis unit (50) configured to perform a principal component analysis using a plurality of analysis results in an analysis area about thermo-fluid;
   a computing unit (50) configured to compute an approximate solution approximate to a final solution by summing analysis patterns obtained by the analysis unit on the basis of a new analysis condition; and
   an implementation unit (60) configured to perform a thermo-fluid analysis using the approximate solution computed by the computing unit as an initial state under the new analysis condition.

6. A thermo-fluid analysis method executed by a computer (1), the thermo-fluid analysis method comprising:

performing (50) a principal component analysis using a plurality of analysis results in an analysis area about thermo-fluid;

computing (50) an approximate solution approximate to a final solution by summing analysis patterns obtained as a result of the principal component analysis on the basis of a new analysis condition; and

performing (60) a thermo-fluid analysis using the computed approximate solution as an initial state under the new analysis condition.

# FIG.1

# FIG.2

# FIG.3

| POSITION X | POSITION Y | POSITION Z | VELOCITY X | VELOCITY Y | VELOCITY Z | TEMPERATURE |
|---|---|---|---|---|---|---|
| 0.00 | 0.00 | 0.00 | 0.0001175 | 0.0001061 | 0.0003079 | 25 |
| 0.00 | 0.10 | 0.00 | 0.000151 | 9.16E-05 | 0.0002715 | 25 |
| 0.00 | 0.20 | 0.00 | 0.0002077 | 7.53E-05 | 0.0002353 | 25.6752 |
| 0.00 | 0.30 | 0.00 | 0.0003045 | 5.49E-05 | 0.0002 | 25.666 |
| 0.00 | 0.40 | 0.00 | 0.0004673 | 2.62E-05 | 0.0001661 | 25.6596 |
| 0.00 | 0.50 | 0.00 | 0.0007353 | -2.01E-05 | 0.0001336 | 25.6551 |
| 0.00 | 0.60 | 0.00 | 0.0011664 | -0.000102 | 0.000102 | 25.6537 |
| 0.00 | 0.70 | 0.00 | 0.0018443 | -0.000255 | 6.99E-05 | 25.6526 |
| 0.00 | 0.80 | 0.00 | 0.0028848 | -0.000548 | 3.50E-05 | 25.6506 |
| 0.00 | 0.90 | 0.00 | 0.0044346 | -0.001112 | -5.64E-06 | 25.6488 |
| 0.00 | 1.00 | 0.00 | 0.0066447 | -0.00218 | -5.62E-05 | 25.6476 |
| 0.00 | 1.10 | 0.00 | 0.0095898 | -0.004141 | -0.000121 | 25.6485 |
| 0.00 | 1.20 | 0.00 | 0.0130984 | -0.007558 | -0.000204 | 25.6507 |
| 0.00 | 1.30 | 0.00 | 0.0165436 | -0.01297 | -0.000306 | 25.654 |
| 0.00 | 1.40 | 0.00 | 0.0189992 | -0.020188 | -0.00042 | 25.661 |
| 0.00 | 1.50 | 0.00 | 0.0197893 | -0.028242 | -0.000538 | 25.6588 |
| 0.00 | 1.60 | 0.00 | 0.0185822 | -0.036316 | -0.000646 | 25.6192 |
| 0.00 | 1.70 | 0.00 | 0.0152464 | -0.043432 | -0.000735 | 25.5447 |
| 0.10 | 0.00 | 0.00 | 0.0101801 | -0.048225 | -0.000798 | 25.5211 |
| 0.10 | 0.10 | 0.00 | 0.004812 | -0.04938 | -0.000835 | 25.5204 |
| 0.10 | 0.20 | 0.00 | 0.0012609 | -0.047452 | -0.000851 | 25.4953 |
| 0.10 | 0.30 | 0.00 | 0 | -0.047452 | -0.000851 | 25.5122 |
| 0.10 | 0.40 | 0.00 | 0 | -0.031556 | -0.000657 | 25 |
| 0.10 | 0.50 | 0.00 | 0.0009739 | -0.031556 | -0.000657 | 25.6488 |
| 0.10 | 0.60 | 0.00 | -6.69E-05 | -0.032669 | -0.000684 | 25.6476 |
| 0.10 | 0.70 | 0.00 | -0.003918 | -0.032239 | -0.00069 | 25.6485 |
| 0.10 | 0.80 | 0.00 | -0.007755 | -0.029899 | -0.000672 | 25.6507 |

# FIG.4

PRE-EXISTING ANALYSIS RESULTS
(TEMPERATURE DISTRIBUTIONS
AND FLOW VELOCITY
DISTRIBUTIONS,
ANALYSIS CONDITIONS)

SENSOR INFORMATION
(POSITIONS,
TEMPERATURE VALUES,
FLOW VELOCITY VALUES,
ANALYSIS CONDITIONS )

# FIG.5

ANALYSIS
CONDITION $_2$

i3

i2

g0

i1

i4

ANALYSIS
CONDITION $_1$

# FIG.6

GRID POINT 0          GRID POINT 1

$u_{i,0}=\{ux_{i,0}, uy_{i,0}, uz_{i,0}\}$          $u_{i,1}=\{ux_{i,1}, uy_{i,1}, uz_{i,1}\}$

$\Delta uy_{wall}=uy_{i,1}-uy_{i,0}=0$

NEUMANN BOUNDARY
CONDITION

BOUNDARY CELL

# FIG.7

PRE-EXISTING ANALYSIS RESULTS

GROUP A    GROUP B    GROUP C

CORRECTION TO SATISFY LAWS OF PHYSICS (INCOMPRESSIBLE CONDITION)

APPROXIMATE SOLUTION

P1    P2    P2

$+a_0$    $+\cdots+a_{m-1}$

COMMON PATTERN

PATTERNS P2 PRODUCED DUE TO DIFFERENCE IN ANALYSIS CONDITION

# FIG.8

START

RECEIVE INPUT INFORMATION (SENSOR INFORMATION, PRE-EXISTING ANALYSIS RESULTS, ANALYSIS MODEL, AND ANALYSIS CONDITIONS) — S11

IS SENSOR INFORMATION RECEIVED? — S12

NO

YES

FORM SENSOR INFORMATION INTO SAME FORMS AS PRE-EXISTING ANALYSIS RESULTS (COMPUTE FLOW VELOCITY AND TEMPERATURE AT EACH MESH OF ANALYSIS MODEL) — S13

RECORD RESULT OF FORMING, PRE-EXISTING ANALYSIS RESULTS, ANALYSIS MODEL, AND ANALYSIS CONDITIONS USED FOR ANALYSIS THIS TIME — S14

GROUP RECORDED DATA INTO GROUPS ON BASIS OF ANALYSIS CONDITIONS — S15

PRODUCE APPROXIMATE SOLUTION USING DATA OF GROUP HAVING ANALYSIS CONDITIONS SIMILAR TO ANALYSIS CONDITIONS USED FOR ANALYSIS THIS TIME — S16

CORRECT APPROXIMATE SOLUTION SO AS TO SATISFY PHYSICAL CONSTRAINTS (E.G., INCOMPRESSIBLE CONDITION) — S17

PERFORM THERMO-FLUID ANALYSIS USING APPROXIMATE SOLUTION AS INITIAL STATE — S18

OUTPUT ANALYSIS RESULT — S19

END

FIG.9A

THERMO-FLUID ANALYSIS RESULT

APPROXIMATE SOLUTION

TYPICAL INITIAL STATE (CONSTANT VALUE)

PRE-EXISTING ANALYSIS RESULTS IN WHICH ANALYSIS CONDITIONS DIFFER FROM THOSE FOR OTHERS ABOUT AIR VOLUME OF FAN

# FIG.9B

ERROR WITH RESPECT TO
ANALYSIS RESULTS

# FIG.10

COMPUTER (200)

HDD (205)
- THERMO-FLUID ANALYSIS PROGRAM (205a)
- THERMO-FLUID ANALYSIS RELEVANT INFORMATION (205b)

MEMORY (201)

DRIVING DEVICE (213)

211

CPU (203)

DISPLAY CONTROLLER (207)

INPUT DEVICE (215)

COMMUNICATION CONTROLLER (217)

219

DISPLAY (209)

TO NETWORK

EP 2 790 118 A2

**REFERENCES CITED IN THE DESCRIPTION**

**Patent documents cited in the description**

- JP 2007179501 A
- JP 2009258879 A
- JP 2005309755 A